# EUROPÄISCHE PATENTSCHRIFT

(11) **EP 1 929 758 B1**
(45) Veröffentlichungstag und Bekanntmachung des Hinweises auf die Patenterteilung: **03.10.2012**
(21) Anmeldenummer: 06778348.0
(22) Anmeldetag: 24.08.2006
(51) Int. Cl.: H04M 3/22

(54) **VERFAHREN ZUR AKTIVIERUNG ZUMINDEST EINER WEITERER ABHÖRHÖRMAßNAHME IN ZUMINDEST EINEM KOMMUNIKATIONSNETZ**
METHOD FOR ACTIVATION OF AT LEAST ONE FURTHER EAVESDROPPING MEASURE IN AT LEAST ONE COMMUNICATION NETWORK
PROCEDE D'ACTIONNEMENT D'AU MOINS UNE MESURE D'ECOUTE SUPPLEMENTAIRE DANS AU MOINS UN RESEAU DE COMMUNICATION

(30) Priorität: 19.09.2005 DE 102005044798
(43) Veröffentlichungstag der Anmeldung: 11.06.2008
(73) Patentinhaber: Nokia Siemens Networks GmbH & Co. KG, 81541 München (DE)
(72) Erfinder: SPALT, Bernhard, A-1150 Wien (AT)
(86) Internationale Anmeldenummer: PCT/EP2006/065626
(87) Internationale Veröffentlichungsnummer: WO 2007/033881

(56) Entgegenhaltungen:
- EP-A- 1 389 864
- WO-A-99/27716

## Beschreibung

Die Erfindung betrifft ein Verfahren zur Aktivierung zumindest einer weiteren Abhörhörmaßnahme in zumindest einem Kommunikationsnetz gemäß dem Oberbegriff des Patentanspruches 1.

Die Bereitstellung von Abhörfunktionalitäten innerhalb eines öffentlichen oder privaten Kommunikationsnetzes wird durch die zuständigen Landes- und Bundesbehörden immer häufiger von den Netzbetreibern (Telecommunication Service Provider = TSP) und den Internet-Dienstanbietern (Internet Service Provider = ISP) gefordert. Die hierzu gegebenen nationale Gesetze und internationalen Übereinkommen ermöglichen so genannten Bedarfsträgern, beispielsweise der Kriminalpolizei, dem Geheimdienst, etc. unter Beachtung der jeweils geltenden gesetzlichen Vorschriften zum Schutz der Kommunikationsteilnehmer (z.B. richterliche Ermächtigung), den Fernmeldeverkehr eines verdächtigen Kommunikationsteilnehmers abzuhören bzw. zu überwachen.

Aus den Veröffentlichungen TS 33.107 und TS 33.108 (siehe hierzu www.3gpp.org) sind Abhörmaßnahmen ("interception") bekannt, bei denen zum Abhören von Kommunikationsdaten ("communication contents"), vorzugsweise Audio, Video oder Multimediadaten sowie Kurzmitteilungen, innerhalb eines Mobilfunknetzes von einer Vermittlungseinrichtung, über welche derartige Daten zu dem zu überwachenden Kommunikationsteilnehmer übertragen werden, zusätzlich an ein Abhörzentrum übertragen werden. Neben diesen Daten können zusätzlich noch den aktuellen oder zuletzt erfassten Ort des Kommunikationsteilnehmers betreffende Daten, sogenannte IRI (= "interception related informations") Daten, an das Abhörzentrum übertragen werden. Die in einem derartigen IRI-Datensatz enthaltenen Ortsdaten repräsentieren Ortsinformationen eines Kommunikationsteilnehmers in Form beispielsweise der Mobilfunkzelle, in der sich der Kommunikationsteilnehmer aktuell befindet bzw. zuletzt befand.

Aus der WO 99/27716 ist beispielsweise ein Verfahren zum Weiterleiten von abgehörten Daten zu autorisierten Abhörzentren, basierend auf der Position des abzuhörenden Teilnehmers, bekannt.

Beispielsweise bei klassischen Telefondiensten im Festnetz ist dies aufgrund der lokalen festen Zuordnung von Vermittlungsstellen zu der zu überwachenden Kommunikationsverbindung durch Kennzeichnung des entsprechenden Teilnehmerdatensatzes und beispielsweise Einrichtung einer Konferenzschaltung zum Bedarfsträger technisch einfach realisierbar. So wurden bisher Abhörmaßnahmen eines Kommunikationsteilnehmers sowohl in leitungsgebundenen als auch zumindest teilweise mobilen Kommunikationsnetzen mittels festgelegter Identitätskennungen, beispielsweise MSISTN, IMSI, IMEI, SIP URI, Tel URI und E.164 in der lokalen Vermittlungsstelle aktiviert.

Unterschiedlich hierzu treten bei paketvermittelnden und/oder zellenvermittelnden, vorzugsweise IP basierten Kommunikationsnetzen, beispielsweise das Internet Protocoll (IP) unterstützenden Kommunikationsnetzen, jedoch aufgrund der funktionalen Aufteilung der Signalisierungsaufgaben und der Sprachdatenübertragung auf unterschiedliche Netzkomponenten, beispielsweise "Communication Handler" Vermittlungsknoten und "Content Handler" Vermittlungsknoten, Probleme auf. Hierbei ist vorab nicht festgelegt, über welchen Datenübertragungskanal bzw. über welchen Vermittlungsknoten die Sprachdaten der Kommunikationsverbindung eines zu überwachenden Kommunikationsteilnehmers geführt werden. Die ursprüngliche Zuordnung eines fest vorgegebenen Datenübertragungskanals zu einem Kommunikationsteilnehmer ist hier nicht mehr gegeben. Darüber hinaus findet auch keine länderspezifische Zuordnung der "Content Handler" Vermittlungsknoten statt, da der Dateninhalt ("communication content") einer Kommunikationsverbindung über beliebige, d.h. inländische oder ausländische Vermittlungsknoten bzw. "Content Handler" Vermittlungsknoten übertragen werden kann.

Beispielsweise werden in einem als "Voice-over-IP (VoIP) Server" ausgebildeten "Communication Handler" Vermittlungsknoten die Signalisierungsdaten einer Kommunikationsverbindung eines zu überwachenden Kommunikationsteilnehmers überwacht und dem zugeordneten Bedarfsträger bzw. dem zugeordneten Abhörzentrum ("Law enforcement agency" (LEA)) zur Verfügung gestellt. Die Vermittlung der zugehörigen Sprachdaten erfolgt jedoch in einem weiteren "Content Handler" Vermittlungsknoten, dessen Netzadresse in dem als Voice-over-IP (VoIP) Server" ausgebildeten "Communication Handler" Vermittlungsknoten dynamisch ermittelt wird. Eine Information über den Standort des den Sprachdatenverkehr abwickelnden "Content Handler" Vermittlungsknoten liegt in dem als Voice-over-IP (VoIP) Server" ausgebildeten "Communication Handler" Vermittlungsknoten nicht vor, zumal die Netzadresse des beteiligten "Content Handler" Vermittlungsknoten keine landesspezifische Kennung wie beispielsweise eine E.164 Nummern aufweist, sondern beispielsweise lediglich eine Internet Protocoll (IP) -Adresse.

In einem ersten Schritt wird mittels hinlänglich bekannter Abhörmaßnahmen ein Kommunikationsteilnehmer anhand zumindest einer Identitätskennung als abzuhörender Kommunikationsteilnehmer identifiziert. Ist bei einer bestehenden Kommunikationsverbindung zumindest einer der Kommunikationsteilnehmer als abzuhörender Kommunikationsteilnehmer identifiziert, so ist die Aktivierung einer weiteren Abhörmaßnahme erforderlich. Vor der Aktivierung einer weiteren Abhörmaßnahme hinsichtlich des die abzuhörenden Sprach- und/oder Videodaten vermittelten "Content Handler" Vermittlungsknotens ist es jedoch erforderlich zu klären, ob der jeweilige Bedarfsträger einen gültigen Überwachungsauftrag zur Überwachung des über den genannten "Content Handler" Vermittlungsknotens geführten Datenverbindung besitzt. Derartige Überwachungsaufträge eines Bedarfsträgers sind jedoch auf das Hoheitsgebiet eines Landes beschränkt, d.h. in einem außerhalb des Landes befindlichen "Communication Handler" Vermittlungsknoten oder "Content Handler" Vermittlungsknoten aktivierte Abhörmaßnahmen entbehren einer rechtlichen Verfügungsgrundlage. Darüber hinaus besteht die Gefahr, dass hierdurch vertrauliche Informationen an unbefugte Dritte im Ausland gelangen.

Die Aufgabe der vorliegenden Erfindung besteht darin, ein Verfahren zur Aktivierung von Abhörmaßnahmen in einem paket - und/oder zellenvermittelnden Kommunikationsnetzwerk anzugeben, bei dem die Aktivierung von zumindest einer weiteren Abhörmaßnahme bzgl. eines außerhalb des Geltungsbereiches von länderspezifischen gesetzlichen Richtlinien befindlichen Vermittlungsknotens vermieden werden kann.

Die Aufgabe wird erfindungsgemäß ausgehend von dem Oberbegriff des Patentanspruches 1 durch dessen kennzeichnende Merkmale gelöst. Weiterbildungen der Erfindung sind in den Unteransprüchen angegeben.

Der wesentliche Aspekt der Erfindung besteht darin, dass zumindest den zur Aktivierung der Abhörmaßnahmen vorgesehenen Vermittlungsknoten jeweils zumindest eine Aktivierungsdatenbasis zugeordnet wird, die die Kennungen der zur Aktivierung von weiteren Abhörmaßnahmen freigegebenen Vermittlungsknoten aufweist. Lediglich bei Übereinstimmung der Kennung des abzuhörenden Vermittlungsknotens mit zumindest einer in der Aktivierungsdatenbasis enthaltenen Kennung wird eine Aktivierung der weiteren Abhörmaßnahme im dem abzuhörenden Vermittlungsknoten durchgeführt. Hierbei kann die Aktivierung sowohl temporär, d.h. nur für die bestehende Datenkommunikation bzw. auch längerfristiger je nach gesetzlichen Vorgaben ausgebildet sein, wobei das jeweilige Ende eines Überwachungsauftrages bei der Aktivierung einer Anhörmaßnahme im Kommunikationsnetz gespeichert wird. Vorteilhaft wird hierdurch sichergestellt, dass nach Identifizierung eines Kommunikationsteilnehmers als abzuhörenden Kommunikationsteilnehmer einzig und allein in denjenigen Vermittlungsknoten eine Aktivierung zumindest einer weiteren Abhörmaßnahme erfolgt, die innerhalb des Geltungsbereiches der länderspezifischen gesetzlichen Richtlinien des Überwachungsauftrages liegen.

Die Erfindung wird im Folgenden anhand von Zeichnungen an einem Ausführungsbeispiel näher erläutert. Es zeigen:
- Figur 1: beispielhaft der Ablauf einer Aktivierung einer Abhörmaßnahme in einem paket- und/oder zellenvermittelnden Kommunikationsnetz und
- Figur 2: beispielhaft eine zur Ablehnung der Aktivierung einer Abhörmaßnahme führende Konfiguration innerhalb des paket- und/oder zellenvermittelnden Kommunikationsnetzes gemäß Figur 1.

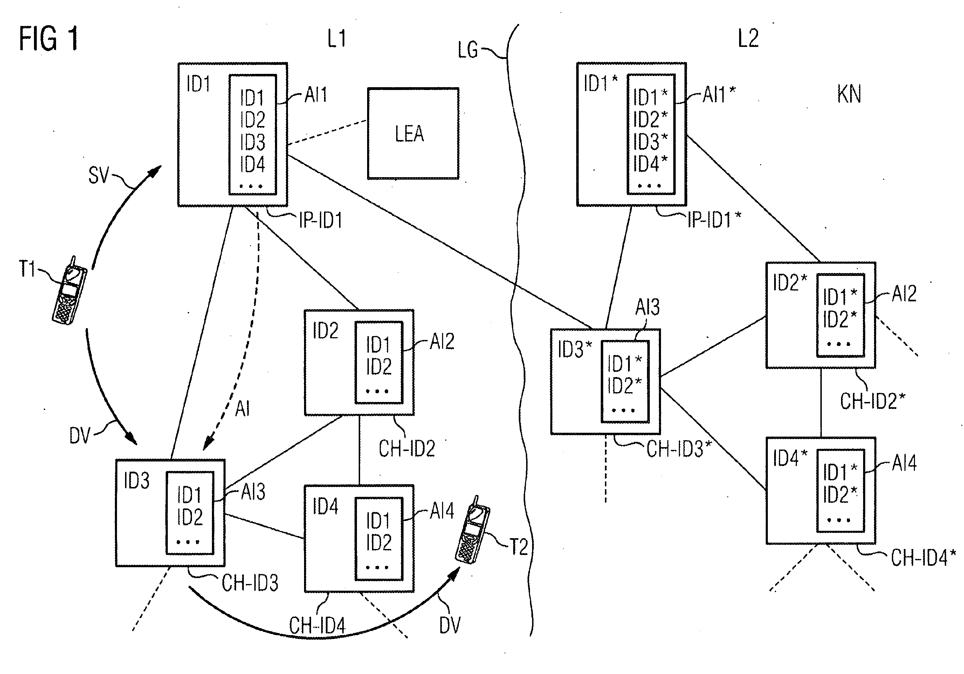

In Figur 1 ist in einer vereinfachten Darstellung beispielhaft ein länderübergreifendes paket- und/oder zellenvermittelndes Kommunikationsnetz KN dargestellt, von dem ein erster Teil des paket- und/oder zellenvermittelnden Kommunikationsnetzes KN in einem ersten Land L1, beispielsweise Deutschland, und ein zweiter Teil des paket- und/oder zellenvermittelnden Kommunikationsnetzes KN in einem zweiten Land L2, beispielsweise Österreich, angeordnet ist.

Das paket- und/oder zellenvermittelnde Kommunikationsnetz KN weist ferner eine Vielzahl von Vermittlungsknoten VoIP-ID1, VoIP-ID1*, CH-ID2 - CH-ID4, CH-ID2* - CH-ID4* auf, welche jeweils auch über die Landesgrenze LG hinweg miteinander verbunden sind. Jedem einzelnen der Vermittlungsknoten IP-ID1, IP-ID1*, CH-ID2 - CH-ID4, CH-ID2* - CH-ID4* ist eine eindeutige Kennung ID1 - ID4, ID1* - ID4* zugeordnet, welche in einer bevorzugten Ausführungsform als Internet Protocoll (IP)-Adresse ausgebildet ist.

Darüber hinaus ist eine mit der Durchführung und Auswertung von Abhörmaßnahmen beauftragte Behördeneinheit LEA vorgesehen, welche beispielsweise über Datenschnittstellen mit dem paket- und/oder zellenvermittelnden Kommunikationsnetz KN bzw. einzelnen Vermittlungsknoten verbunden ist.

Im paket- und/oder zellenvermittelnden Kommunikationsnetz KN wird zwischen für Signalisierungsaufgaben zuständigen Vermittlungsknoten bzw. beispielhaft als "Voice over IP Server" ausgebildeten "Communication Handler" Vermittlungsknoten IP-ID1, IP-ID1* und für die Datenübertragungsaufgaben zuständigen Vermittlungsknoten bzw. "Content Handler" Netzknoten CH-ID2 - CH-ID4, CH-ID2* - CH-ID4* unterschieden.

Zumindest in den "Communication Handler" Vermittlungsknoten IP-ID1, IP-ID1* ist jeweils eine dynamische Aktivierungsdatenbasis AI1, AI1*, vorzugsweise in Form einer Aktivierungsliste vorgesehen, in der die für die Aktivierung von Abhörmaßnahmen freigegeben Netzkennungen ID1 - ID4 bzw. ID1* bis ID4* der "Communication Handler" Vermittlungsknoten IP-ID1, IP-ID1* und der "Content Handler" Vermittlungsknoten CH-ID2 - CH-ID4, CH-ID2* - CH-ID4*.

In einer bevorzugten Ausführungsform erfolgt die Freigabe der "Content Handler" Vermittlungsknoten CH-ID2 - CH-ID4, CH-ID2* - CH-ID4* länderspezifisch, d.h. lediglich in einem Land L1, L2 lokal befindliche "Content Handler" Vermittlungsknoten CH-ID2 - CH-ID4, CH-ID2* - CH-ID4* werden in eine Aktivierungsdatenbasis AI1, AI1* aufgenommen. Beispielsweise sind bei dem in Figur 1 dargestellten Ausführungsbeispiel sämtliche das erste Land L1 betreffenden Kennungen ID1 - ID4 in einer ersten Aktivierungsdatenbasis AI1 und sämtliche das zweite Land L2 betreffenden Kennungen ID1* - ID4* in einer zweiten Aktivierungsdatenbasis AI1* aufgeführt.

Zum Aufbau einer Kommunikationsverbindung KV innerhalb des paket- und/oder zellenvermittelnden Kommunikationsnetzes KN von einem ersten Kommunikationsteilnehmer T1 zu zumindest einem zweiten Kommunikationsteilnehmer T2 wird zunächst durch den ersten Kommunikationsteilnehmer T1 der Verbindungsaufbau dadurch initiiert, dass an den zugehörigen "Communication Handler" Vermittlungsknoten IP-ID1 über eine Signalisierungsverbindung SV eine Verbindungsanfrage gerichtet wird. Die Verbindungsanfrage umfasst beispielsweise die für den Aufbau einer Kommunikationsverbindung KV erforderlichen Teilnehmerdaten, d.h. die eigene Rufnummer sowie zumindest die Rufnummer des zweiten Kommunikationsteilnehmers T2.

Die ersten oder zweiten Kommunikationsteilnehmer T1, T2 können sowohl über ein mobiles als auch über ortsfestes Kommunikationsendgerät, beispielsweise Mobilfunkgeräte, Festnetzgeräte, stationäre oder mobile Computer oder Ähnliches kommunizieren. Auch werden unterschiedlichste Kommunikationsdienste, insbesondere Multimedia-Dienste innerhalb des Telekommunikationsnetzes TKN unterstützt.

Der "Communication Handler" Vermittlungsknoten IP-ID1 wertet die übermittelten Teilnehmerdaten aus und ordnet dem ersten Kommunikationsteilnehmer T1 zum Aufbau einer Datenverbindung DV, über welche die Kommunikationsdaten ("Communication Contents") übertragen werden, einen Vermittlungsknoten bzw. "Content Handler" Vermittlungsknoten CH-ID3 zu. Über den "Content Handler" Vermittlungsknoten CH-ID3 wird zum gewünschten zweiten Kommunikationsteilnehmer T2 beispielsweise über einen weiteren "Content Handler" Netzknoten CH-ID4 die zugeordnete Datenverbindung DV aufgebaut. Hierbei ist vorab nicht festgelegt, über welchen "Content Handler" Netzknoten CH-ID2 - CH-ID4, CH-ID2* - CH-ID4* die Kommunikationsdaten der Kommunikationsverbindung KV geführt werden.

Die Kommunikationsverbindung KV wird im Rahmen der IPbasierten Kommunikation zunächst in eine Signalisierungsverbindung SV und eine Datenverbindung DV aufgeteilt. Zunächst wird über die Signalisierungsverbindung SV dem ersten Kommunikationsteilnehmer T1 die Kennung desjenigen "Content Handler" Vermittlungsknoten CH-ID3 mitgeteilt, über den die Datenverbindung DV aufgebaut werden soll. Im Anschluss daran wird zunächst die gewünschte Datenverbindung DV vom ersten zum zweiten Kommunikationsteilnehmer T1, T2 aufgebaut und darüber Sprachdaten übertragen.

In einem weiteren Schritt wird eine erste Abhörmaßnahme beispielsweise durch den "Communication Handler" Vermittlungsknoten IP-ID1 eingeleitet, und zwar wird mittels bekannter Abhörverfahren durch Auswertung und Vergleich beispielsweise der für den Aufbau einer Kommunikationsverbindung KV erforderlichen Teilnehmerdaten mit vorgegebenen Abhörinformationen diejenigen Kommunikationsteilnehmer T1, T2 identifiziert, deren Kommunikationsverbindungen KV überwacht werden sollen. Weitere Abhörmaßnahmen bezüglich der als abzuhörenden Kommunikationsteilnehmer identifizierte Kommunikationsteilnehmer T1, T2 werden meist in dem ersten "Content Handler" Vermittlungsknoten CH-ID3 einer Kommunikationsverbindung KV umgesetzt, und zwar werden in diesem die betroffenen Datenverbindungen DV des anzuhörenden Kommunikationsteilnehmers T1, T2 ausgekoppelt und als Kopie an den entsprechenden Bedarfsträger bzw. die mit der Durchführung und Auswertung von Abhörmaßnahmen beauftragte Behördeneinheit LEA weitergeleitet.

Zur Aktivierung einer derartigen weiteren Abhörmaßnahme wird von dem die Signalisierungsverbindung SV verwaltenden "Communication Handler" Vermittlungsknoten IP-ID1 eine Aktivierungsinformation AI erzeugt und an den zugehörigen "Content Handler" Vermittlungsknoten CH-ID3 übertragen. Die Übertragung der Aktivierungsinformation AI erfolgt hierbei in einer bevorzugten Ausführungsform in einem gesicherten Modus, vorzugsweise verschlüsselt.

Nach Empfang der Aktivierungsinformation AI in dem "Content Handler" Vermittlungsknoten CH-ID3 wird in diesem die vorgegebene weitere Abhörmaßnahme aktiviert. Hierzu sind in der Aktivierungsinformation AI die die jeweils zu überwachende Datenverbindung DV kennzeichnenden Informationen enthalten.

Erfindungsgemäß wird vor der Erzeugung der jeweiligen Aktivierungsinformation AI die Kennung ID3 desjenigen "Content Handler" Vermittlungsknotens CH-ID3, über welchen die zu überwachenden Datenverbindung DV geführt ist, mit den in der zugeordneten Aktivierungsdatenbasis AI1 enthaltenen Kennungen ID1 - ID4 verglichen und lediglich bei Übereinstimmung der Kennung ID3 des zu überwachenden Vermittlungsknotens CH-ID3 mit zumindest einer in der Aktivierungsdatenbasis AI1 enthaltenen Kennung ID1 - ID4 eine Aktivierung der Abhörmaßnahme durch Erzeugung und Übermittlung der zugehörigen Aktivierungsinformation AI an den zu überwachenden "Content Handler" Vermittlungsknotens CH-ID3 aktiviert.

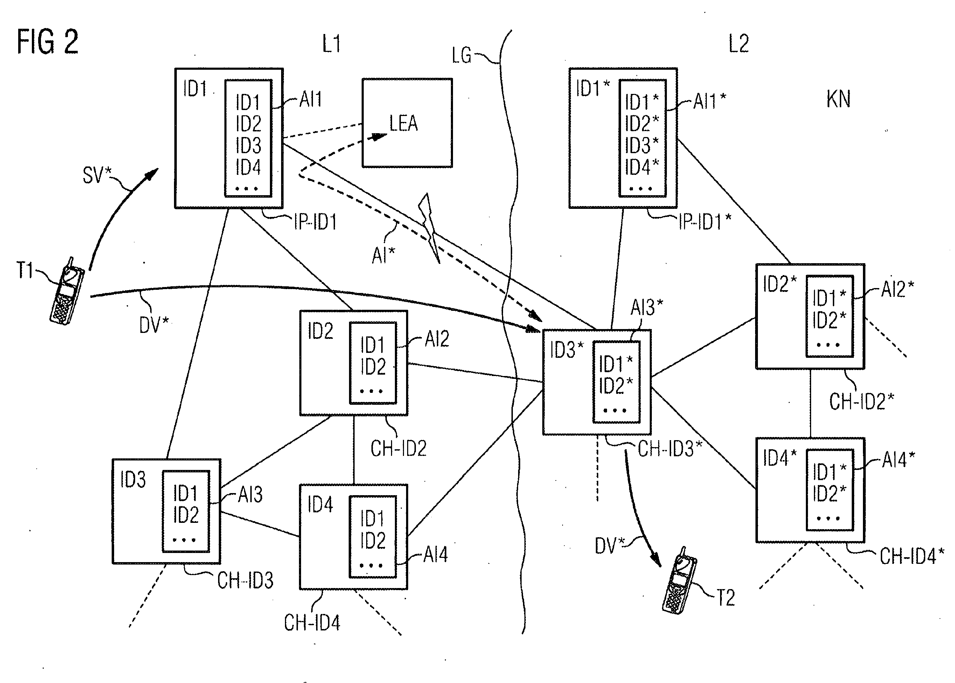

Wird die Datenverbindung DV* über einen nicht freigegeben "Content Handler" Vermittlungsknoten CH-ID3* aufgebaut - wie beispielhaft in Figur 2 dargestellt, so wird die Kennung ID3* des "Content Handler" Vermittlungsknoten CH-ID3* mit den in der Aktivierungsdatenbasis AI1 enthaltenen Kennungen ID1 - ID4 verglichen und aufgrund der fehlenden Übereinstimmung keine Aktivierungsinformation AI* erzeugt bzw. an den betroffenen "Content Handler" Vermittlungsknoten CH-ID3* übertragen. Alternativ kann die Aktivierungsinformation AI* als gescheiterte Aktivierungsinformation an den entsprechenden Bedarfsträger bzw. die mit der Durchführung und Auswertung von Abhörmaßnahmen beauftragte Behördeneinheit LEA weitergeleitet werden.

Die Aktivierungsdatenbasen AI1, AI1* werden dynamisch aktualisiert. Darüber hinaus können für unterschiedliche Abhörmaßnahmen unterschiedliche Aktivierungsdatenbasen AI1, AI1* in den jeweiligen "Communication Handler" Vermittlungsknoten IP-ID1, IP-ID1*, welche von den zu aktivierenden Abhörmaßnahmentyp abhängige Dateneinträge enthalten.

In einer weiteren Ausführungsform sind neben den "Communication Handler" Vermittlungsknoten IP-ID1, IP-ID1* auch in den "Content Handler" Vermittlungsknoten CH-ID2 - CH-ID4, CH-ID2* - CH-ID4* des paket- und/oder zellenvermittelnden Kommunikationsnetzes KN Aktivierungsdatenbasen AI2 -AI4, AI2*-AI4* vorgesehen, welche ebenfalls dynamisch aktualisiert werden. Aufgrund der in den "Content Handler" Vermittlungsknoten CH-ID2 - CH-ID4, CH-ID2* - CH-ID4* vorliegenden Aktivierungsdaten kann in einer alternativen Ausführungsform durch den "Content Handler" Vermittlungsknoten CH-ID2 - CH-ID4, CH-ID2* - CH-ID4* selbst verifiziert werden, ob dieser für eine Aktivierung der weiteren Abhörmaßnahmen freigegeben ist.

Die Aktivierung der Abhörmaßnahme kann für die Dauer einer bestehenden Datenverbindung DV oder auch für eine weitere vorgegebene Zeitdauer erfolgen.

Die Erfindung wurde voranstehend anhand eines Ausführungsbeispiels näher beschrieben. Es versteht sich von selbst, daß zahlreiche Modifikationen sowie Abwandlungen möglich sind, ohne daß dadurch der der Erfindung zugrunde liegende Erfindungsgedanke verlassen wird.

### Bezugszeichenliste

- AI, AI*: Aktivierungsinformation
- AI1, AI1*: Aktivierungsdatenbasis
- AI2, AI2*: weitere Aktivierungsdatenbasen
- AI3, AI3*: weitere Aktivierungsdatenbasen
- AI4, AI4*: weitere Aktivierungsdatenbasen
- CH-ID2*, 3*, 4*: "Content Handler" Vermittlungsknoten
- CH-ID2,3,4: "Content Handler" Vermittlungsknoten
- DV, DV*: Datenverbindung
- ID1, ID1*: Kennung
- ID2, ID2*: Kennung
- ID3, ID3*: Kennung
- ID4, ID4*: Kennung
- IP-ID1, 1*: "Communication Handler" Vermittlungsknoten
- KN: Telekommunikationsnetz
- KV: Kommunikationsverbindung
- L1: erstes Land
- L2: zweites Land
- LEA: Behördeneinheit
- LG: Landesgrenze
- SV, SV*: Signalisierungsverbindung
- T1: erster Kommunikationsteilnehmer
- T2: zweiter Kommunikationsteilnehmer

## Patentansprüche

1. Verfahren zur Aktivierung von zumindest einer weiteren Abhörmaßnahme in zumindest einem Vermittlungsknoten (CH-ID2 - CH-ID4, CH-ID2* - CH-ID4*) eines aus mehreren Vermittlungsknoten (IP-ID1, IP-ID1*, CH-ID2 - CH-ID4, CH-ID2* - CH-ID4*) bestehenden paket- und/oder zellenvermittelnden Kommunikationsnetzes (KN), wobei das Kommunikationsnetz (KN) "Communication Handler" Vermittlungsknoten (IP-ID1, IP-ID1*) und "Content Handler" Vemittlungsknoten (CH-ID2 - CH-ID4, CH-ID2* - CH-ID4*) umfasst und eine erste Abhörmaßnahme durch einen "Communication Handler" Vermittlungsknoten (IP-ID1, IP-ID1*) eingeleitet ist, wobei die weitere Abhörmaßnahme zum Abhören von zumindest einer zwischen zwei Kommunikationsteilnehmern (T1, T2) bestehenden und über zumindest einen "Content Handler" Vermittlungsknoten (CH-ID2 - CH-ID4, CH-ID2* - CH-ID4*) vermittelten Datenverbindung (DV) dient, wobei den einzelnen Vermittlungsknoten (IP-ID1, IP-ID1*, CH-ID2 - CH-ID4, CH-ID2* - CH-ID4*) des Kommunikationsnetzes (KN) jeweils eindeutige Kennungen (ID1 - ID4, ID1* - ID4*) zugeordnet sind, und bei dem zumindest einer der zwei Kommunikationsteilnehmer (T1, T2) mittels der ersten Abhörmaßnahme als abzuhörender Kommunikationsteilnehmer (T1) identifiziert wird,
wobei zumindest den zur Aktivierung einer weiteren Abhörmaßnahme vorgesehenen Vermittlungsknoten (IP-ID1, IP-ID1*) jeweils zumindest eine Aktivierungsdatenbasis (AI1, AI1*) zugeordnet wird, die die Kennungen (ID1 - ID4, ID1* - ID4*) der zur Aktivierung von weiteren Abhörmaßnahmen freigegebenen "Content Handler" Vermittlungsknoten (CH-ID2 - CH-ID4, CH-ID2* - CH-ID4*) aufweist,
wobei lediglich bei Übereinstimmung der Kennung (ID3, ID3*) des abzuhörenden "Content Handler" Vermittlungsknotens (CH-ID3, CH-ID3*) mit zumindest einer in der Aktivierungsdatenbasis (AI1, AI1*) enthaltenen Kennung (ID1 - ID4, ID1* - ID4*) eine Aktivierung der weiteren Abhörmaßnahme zum Abhören des abzuhörenden "Content Handler" Vermittlungsknoten (CH-ID3, CH-ID3*) durchgeführt wird.

2. Verfahren nach Anspruch 1,
**dadurch gekennzeichnet,**
**dass** die Aktivierung der weiteren Abhörmaßnahmen entweder in einem "Communication Handler" Vermittlungsknoten (IP-ID1, IP-ID1*) oder einem "Content Handler" Vermittlungsknoten (CH-ID2 - CH-ID4, CH-ID2* - CH-ID4*) durchgeführt wird.

3. Verfahren nach Anspruch 2,
**dadurch gekennzeichnet,**
**dass** Aktivierungsdatenbasen (AI1, AI1*) sowohl in den "Communication Handler" Vermittlungsknoten (IP-ID1, IP-ID1*) als auch in den "Content Handler" Vermittlungsknoten (CH-ID2 - CH-ID4, CH-ID2* - CH-ID4*) vorgesehen werden.

4. Verfahren nach einem der Ansprüche 1 bis 3,
**dadurch gekennzeichnet,**
**dass** zur Aktivierung der weiteren Abhörmaßnahme in dem zugehörigen "Communication Handler" Vermittlungsknoten (IP-ID1, IP-ID1*) zumindest eine Aktivierungsinformation (AI) erzeugt und an den abzuhörenden "Content Handler" Vermittlungsknoten (CH-ID3, CH-ID3*) übertragen wird.

5. Verfahren nach einem der Ansprüche 1 bis 4,
**dadurch gekennzeichnet,**
**dass** der Aufbau, die Aufrechterhaltung sowie der Abbau einer Kommunikationsverbindung (KV) über eine Signalisierungsverbindung (SV) gesteuert wird, welche durch die "Communication Handler" Vermittlungsknoten (IP-ID1, IP-ID1*) verwaltet wird.

6. Verfahren nach einem der Ansprüche 1 bis 5,
**dadurch gekennzeichnet,**
**dass** die in der Aktivierungsdatenbasis (AI1, AI1*) gespeicherten Kennungen (ID1 - ID4, ID1* - ID4*) landesspezifisch ausgewählt werden.

7. Verfahren nach einem der Ansprüche 1 bis 5,
**dadurch gekennzeichnet,**
**dass** die Kennung (ID3) desjenigen "Content Handler" Vermittlungsknotens (CH-ID3), über welchen die abzuhörende Datenverbindung (DV) geführt wird, mit den in der zugeordneten Aktivierungsdatenbasis (AI1) enthaltenen Kennungen (ID1 - ID4) verglichen wird und
**dass** bei Übereinstimmung der Kennung (ID3) des abzuhörenden "Content Handler" Vermittlungsknotens (CH-ID3) mit zumindest einer in der Aktivierungsdatenbasis (AI1) enthaltenen Kennung (ID1 - ID4) eine Aktivierung der weiteren Abhörmaßnahme erfolgt.

8. Verfahren nach einem der Ansprüche 1 bis 7,
**dadurch gekennzeichnet,**
**dass** nach Aktivierung der Abhörmaßnahme eine Kopie der über den abzuhörenden "Content Handler" Vermittlungsknoten (CH-ID3) geführten Datenverbindung (DV) an den entsprechenden Bedarfsträger bzw. die mit der Durchführung und Auswertung von Abhörmaßnahmen beauftragte Behördeneinheit (LEA) weitergeleitet wird.

9. Verfahren nach Anspruch 7,
**dadurch gekennzeichnet,**
**dass** bei einer fehlenden Übereinstimmung der Kennung (ID3) des abzuhörenden "Content Handler" Vermittlungsknotens (CH-ID3) mit zumindest einer in der Aktivierungsdatenbasis (AI1) enthaltenen Kennung (ID1 - ID4) an den entsprechenden Bedarfsträger bzw. die mit der Durchführung und Auswertung von Abhörmaßnahmen beauftragte Behördeneinheit (LEA) eine Information über das Scheitern der Aktivierung der Abhörmaßnahme weitergeleitet werden.

10. Verfahren nach einem der Ansprüche 3 bis 9,
**dadurch gekennzeichnet,**
**dass** die zur Identifizierung der Kommunikationsteilnehmer als abzuhörende Kommunikationsteilnehmer vorgesehenen Abhörmaßnahmen mittels festgelegter Identitätskennungen, beispielsweise MSISTN, IMSI, IMEI, SIP URI, Tel URI, IP - und/oder Zellenadressen sowie E.164 aktiviert werden.

11. Verfahren nach einem der Ansprüche 1 bis 10,
**dadurch gekennzeichnet,**
**dass** die Aktivierungsdatenbasen (AI1 -AI4, AI1*-AI4*) als fortlaufend aktualisierte Aktivierungslisten realisiert werden.

12. Verfahren nach einem der Ansprüche 1 bis 11,
**dadurch gekennzeichnet,**
**dass** die Aktivierung der Abhörmaßnahme für die bestehende Datenverbindung (DV) oder auch für eine vorgegeben Zeitdauer erfolgt.

13. Verfahren nach einem der Ansprüche 1 bis 12,
**dadurch gekennzeichnet,**
**dass** über die Datenverbindung (DV) Audio-, Video- oder weitere Multimediadaten sowie Kurznachrichten übertragen werden.

14. Vermittlungsknoten zur Aktivierung von zumindest einer weiteren Abhörmaßnahme in einem paket- und/oder zellenvermittelnden Kommunikationsnetz (KN), welches zumindest einen "Communication Handler" Vermittlungsknoten (IP-ID1, IP-ID1*) und zumindest einen "Content Handler" Vermittlungsknoten (CH-ID2 - CH-ID4, CH-ID2* - CH-ID4*) umfasst, denen jeweils eindeutige Kennungen (ID1 - ID4, ID1* - ID4*) zugeordnet sind, wobei durch einen "Communication Handler" Vermittlungsknoten (IP-ID1, IP-ID1*) eine erste Abhörmaßnahme eingeleitet ist,
dass zur Aktivierung zumindest eine weiteren Abhörmaßnahme der Vermittlungsknoten entweder als "Communication Handler" Vermittlungsknoten (IP-ID1, IP-ID1*) oder als "Content Handler" Vermittlungsknoten (CH-ID2 - CH-ID4, CH-ID2* - CH-ID4*) ausgebildet ist, wobei die weitere Abhörmaßnahme zum Abhören von zumindest einer zwischen zwei Kommunikationsteilnehmern (T1, T2) bestehenden und über zumindest einen "Content Handler" Vermittlungsknoten (CH-ID2 - CH-ID4, CH-ID2* - CH-ID4*) vermittelten Datenverbindung (DV) dient und zumindest einer der zwei Kommunikationsteilnehmer (T1, T2) mittels der ersten Abhörmaßnahme als abzuhörender Kommunikationsteilnehmer (T1) identifiziert wird, dass dem zur Aktivierung der weiteren Abhörmaßnahme vorgesehenen Vermittlungsknoten jeweils zumindest eine Aktivierungsdatenbasis (AI1, AI1*) zugeordnet ist, die die Kennungen (ID1 - ID4, ID1* - ID4*) der zur Aktivierung von weiteren Abhörmaßnahmen freigegebenen "Content Handler" Vermittlungsknoten (CH-ID2 - CH-ID4, CH-ID2* - CH-ID4*) aufweist und
dass der zur Aktivierung der weiteren Abhörmaßnahme vorgesehene Vermittlungsknoten (IP-ID1, IP-ID1*) zur Überprüfung der Übereinstimmung der Kennung (ID3, ID3*) des abzuhörenden "Content Handler" Vermittlungsknotens (CH-ID3, CH-ID3*) mit zumindest einer in der Aktivierungsdatenbasis (AI1, AI1*) enthaltenen Kennung (ID1 - ID4, ID1* - ID4*) ausgebildet ist, wobei lediglich bei einer Übereinstimmung eine Aktivierung der weiteren Abhörmaßnahme zum Abhören des abzuhörenden "Content Handler" Vermittlungsknoten (CH-ID3, CH-ID3*) durchgeführt wird.

15. Vermittlungsknoten nach Anspruch 14,
**dadurch gekennzeichnet,**
**dass** die Aktivierungsdatenbasen (AI1, AI1*) sowohl in den "Communication Handler" Vermittlungsknoten (IP-ID1, IP-ID1*) als auch in den "Content Handler" Vermittlungsknoten (CH-ID2 - CH-ID4, CH-ID2* - CH-ID4*) vorgesehen sind.

16. Vermittlungsknoten nach Anspruch 14 oder 15,
**dadurch gekennzeichnet,**
**dass** zur Aktivierung der weiteren Abhörmaßnahme in dem zugehörigen "Communication Handler" Vermittlungsknoten (IP-ID1, IP-ID1*) dieser zur Erzeugung zumindest einer Aktivierungsinformation (AI) und dessen Übertragung an den abzuhörenden "Content Handler" Vermittlungsknoten (CH-ID3, CH-ID3*) ausgebildet ist.

17. Vermittlungsknoten nach einem der Ansprüche 14 bis 16,
**dadurch gekennzeichnet,**
**dass** der "Communication Handler" Vermittlungsknoten (IP-ID1, IP-ID1*) zur Verwaltung des Aufbaus, der Aufrechterhaltung sowie des Abbaus einer Kommunikationsverbindung (KV) über eine Signalisierungsverbindung (SV) ausgebildet ist.

18. Vermittlungsknoten nach einem der Ansprüche 14 bis 17,
**dadurch gekennzeichnet,**
**dass** die Aktivierungsdatenbasis (AI1, AI1*) landesspezifisch gespeicherte Kennungen (ID1 - ID4, ID1* - ID4*) aufweist.

19. Vermittlungsknoten nach einem der Ansprüche 14 bis 18,
**dadurch gekennzeichnet,**
**dass** der Vermittlungsknoten zum Vergleich der Kennung (ID3) desjenigen "Content Handler" Vermittlungsknotens (CH-ID3), über welchen die abzuhörende Datenverbindung (DV) geführt wird, mit den in der zugeordneten Aktivierungsdatenbasis (AI1) enthaltenen Kennungen (ID1 - ID4) ausgebildet ist, wobei bei Übereinstimmung der Kennung (ID3) des abzuhörenden "Content Handler" Vermittlungsknotens (CH-ID3) mit zumindest einer in der Aktivierungsdatenbasis (AI1) enthaltenen Kennung (ID1 - ID4) eine Aktivierung der weiteren Abhörmaßnahme erfolgt und/oder bei einer fehlenden Übereinstimmung an den entsprechenden Bedarfsträger bzw. die mit der Durchführung und Auswertung von Abhörmaßnahmen beauftragte Behördeneinheit (LEA) eine Information über das Scheitern der Aktivierung der Abhörmaßnahme weitergeleitet werden.

20. Vermittlungsknoten nach einem der Ansprüche 14 bis 19,
**dadurch gekennzeichnet,**
**dass** zur Identifizierung der Kommunikationsteilnehmer als abzuhörende Kommunikationsteilnehmer Abhörmaßnahmen mittels festgelegter Identitätskennungen, beispielsweise MSISTN, IMSI, IMEI, SIP URI, Tel URI, IP - und/oder Zellenadressen sowie E.164 aktiviert sind und/oder dass die Aktivierungsdatenbasen (AI1 -AI4, AI1*-AI4*) als fortlaufend aktualisierte Aktivierungslisten realisiert sind und/oder
**dass** die Aktivierung der Abhörmaßnahme für die bestehende Datenverbindung (DV) oder auch für eine vorgegeben Zeitdauer erfolgt und/oder
**dass** die Datenverbindung (DV) zur Übertragung von Audio-, Video- oder weitere Multimediadaten sowie Kurznachrichten vorgesehen ist.

## Claims

1. Method for activating at least one further eavesdropping measure in at least one switching node (CH-ID2 - CH-ID4, CH-ID2* - CH-ID4*) in a packet-switched and/or cell-switched communication network (KN), comprising a plurality of switching nodes (IP-ID1, IP-ID1*, CH-ID2 - CH-ID4, CH-ID2* - CH-ID4*), wherein the communication network (KN) comprises "communication handler" switching nodes (IP-ID1, IP-ID1*) and "content handler" switching nodes (CH-ID2 - CH-ID4, CH-ID2* - CH-ID4*) and a first eavesdropping measure is initiated by a "communication handler" switching node (IP-ID1, IP-ID1*), the further eavesdropping measure being used for the purpose of eavesdropping on at least one data link (DV) which exists between two communication subscribers (T1, T2) and which is switched via at least one "content handler" switching node (CH-ID2 - CH-ID4, CH-ID2* - CH-ID4*), the individual switching nodes (IP-ID1, IP-ID1*, CH-ID2 - CH-ID4, CH-ID2* - CH-ID4*) in the communication network (KN) having respective associated unique identifiers (ID1 - ID4, ID1* - ID4*), and in which at least one of the two communication subscribers (T1, T2) is identified as the communication subscriber (T1) for eavesdropping by means of the first eavesdropping measure,
wherein at least the switching nodes (IP-ID1, IP-ID1*) provided for activating a further eavesdropping measure are respectively assigned at least one activation database (AI1, AI1*) which has the identifiers (ID1 - ID4, ID1* - ID4*) of the "content handler" switching nodes (CH-ID2 - CH-ID4, CH-ID2* - CH-ID4*) enabled for activating further eavesdropping measures,
wherein only if there is a match between the identifier (ID3, ID3*) of the "content handler" switching node (CH-ID3, CH-ID3*) for eavesdropping and at least one identifier (ID1 - ID4, ID1* - ID4*) contained in the activation database (AI1, AI1*) is the further eavesdropping measure activated for eavesdropping on the "content handler" switching node (CH-ID3, CH-ID3*) for eavesdropping.

2. Method according to Claim 1,
**characterized**
**in that** the further eavesdropping measures are activated either in a "communication handler" switching node (IP-ID1, IP-ID1*) or in a "content handler" switching node (CH-ID2 - CH-ID4, CH-ID2* - CH-ID4*).

3. Method according to Claim 2,
**characterized**
**in that** activation databases (AI1, AI1*) are provided both in the "communication handler" switching node (IP-ID1, IP-ID1*) and in the "content handler" switching node (CH-ID2 - CH-ID4, CH-ID2* - CH-ID4*).

4. Method according to one of Claims 1 to 3,
**characterized**
**in that** the further eavesdropping measure is activated in the associated "communication handler" switching node (IP-ID1, IP-ID1*) by producing at least one activation information item (AI) and transmitting it to the "content handler" switching node (CH-ID3, CH-ID3*) for eavesdropping.

5. Method according to one of Claims 1 to 4,
**characterized**
**in that** the setup, maintenance and cleardown of a communication link (KV) is controlled via a signalling link (SV) which is managed by the "communication handler" switching nodes (IP-ID1, IP-ID1*).

6. Method according to one of Claims 1 to 5,
**characterized**
**in that** the identifiers (ID1 - ID4, ID1* - ID4*) stored in the activation database (AI1, AI1*) are selected on a country-specific basis.

7. Method according to one of Claims 1 to 5,
**characterized**
**in that** the identifier (ID3) of that "content handler" switching node (CH-ID3) via which the data link (DV) for eavesdropping is routed is compared with the identifiers (ID1 - ID4) contained in the associated activation database (AI1), and
**in that** if there is a match between the identifier (ID3) of the "content handler" switching node (CH-ID3) for eavesdropping and at least one identifier (ID1 - ID4) contained in the activation database (AI1) then the further eavesdropping measure is activated.

8. Method according to one of Claims 1 to 7,
**characterized**
**in that** activation of the eavesdropping measure is followed by a copy of the data link (DV) routed via the "content handler" switching node (CH-ID3) for eavesdropping being forwarded to the appropriate consumer or the authority unit (LEA) tasked with implementing and evaluating eavesdropping measures.

9. Method according to Claim 7,
**characterized**
**in that** if there is no match between the identifier (ID3) of the "content handler" switching node (CH-ID3) for eavesdropping and at least one identifier (ID1 - ID4) contained in the activation database (AI1) then an information item about failure of the activation of the eavesdropping measure is forwarded to the appropriate consumer or the authority unit (LEA) tasked with implementing and evaluating eavesdropping measures.

10. Method according to one of Claims 3 to 9,
**characterized**
**in that** the eavesdropping measures provided for identifying the communication subscribers as communication subscribers for eavesdropping are activated by means of stipulated identity identifiers, for example MSISTN, IMSI, IMEI, SIP URI, Tel URI, IP and/or cell addresses and also E.164.

11. Method according to one of Claims 1 to 10,
**characterized**
**in that** the activation databases (AI1 -AI4, AI1*-AI4*) are implemented as continually updated activation lists.

12. Method according to one of Claims 1 to 11,
**characterized**
**in that** the eavesdropping measure is activated for the existing data link (DV) or else for a prescribed period.

13. Method according to one of Claims 1 to 12,
**characterized**
**in that** the data link (DV) is used to transmit audio, video or other multimedia data and also short messages.

14. Switching node for activating at least one further eavesdropping measure in a packet-switched and/or cell-switched communication network (KN) which comprises at least one "communication handler" switching node (IP-ID1, IP-ID1*) and at least one "content handler" switching node (CH-ID2 - CH-ID4, CH-ID2* - CH-ID4*), each of which have unique identifiers (ID1 - ID4, ID1* - ID4*) associated with them, wherein a "communication handler" switching node (IP-ID1, IP-ID1*) initiates a first eavesdropping measure,
wherein for the purpose of activating at least one further eavesdropping measure the switching node is either in the form of a "communication handler" switching node (IP-ID1, IP-ID1*) or in the form of a "content handler" switching node (CH-ID2 - CH-ID4, CH-ID2* - CH-ID4*), the further eavesdropping measure being used for the purpose of eavesdropping on at least one data link (DV) which exists between two communication subscribers (T1, T2) and which is switched via at least one "content handler" switching node (CH-ID2 - CH-ID4, CH-ID2* - CH-ID4*), and at least one of the two communication subscribers (T1, T2) being identified as the communication subscriber (T1) for eavesdropping by means of the first eavesdropping measure, wherein the switching node provided for activating the further eavesdropping measure has at least one respective associated activation database (AI1, AI1*) which has the identifiers (ID1 - ID4, ID1* - ID4*) of the "content handler" switching nodes (CH-ID2 - CH-ID4, CH-ID2* - CH-ID4*) enabled for the purpose of activating further eavesdropping measures, and
wherein the switching node (IP-ID1, IP-ID1*) provided for activating the further eavesdropping measure is designed to check the match between the identifier (ID3, ID3*) of the "content handler" switching node (CH-ID3, CH-ID3*) for eavesdropping and at least one identifier (ID1 - ID4, ID1* - ID4*) contained in the activation database (AI1, AI1*), and only if there is a match is the further eavesdropping measure activated for eavesdropping on the "content handler" switching node (CH-ID3, CH-ID3*) for eavesdropping.

15. Switching node according to Claim 14,
**characterized**
**in that** the activation databases (AI1, AI1*) are provided both in the "communication handler" switching node (IP-ID1, IP-ID1*) and in the "content handler" switching node (CH-ID2 - CH-ID4, CH-ID2* - CH-ID4*).

16. Switching node according to Claim 14 or 15,
**characterized**
**in that** for the purpose of activating the further eavesdropping measure in the associated "communication handler" switching node (IP-ID1, IP-ID1*) the latter is designed to produce at least one activation information item (AI) and to transmit it to the "content handler" switching node (CH-ID3, CH-ID3*) for eavesdropping.

17. Switching node according to one of Claims 14 to 16,
**characterized**
**in that** the "communication handler" switching node (IP-ID1, IP-ID1*) is designed to manage the setup, maintenance and cleardown of a communication link (KV) via a signalling link (SV).

18. Switching node according to one of Claims 14 to 17,
**characterized**
**in that** the activation database (AI1, AI1*) has identifiers (ID1 - ID4, ID1* - ID4*) stored on a country-specific basis.

19. Switching node according to one of Claims 14 to 18,
**characterized**
**in that** the switching node is designed to compare the identifier (ID3) of that "content handler" switching node (CH-ID3) via which the data link (DV) for eavesdropping is routed with the identifiers (ID1 - ID4) contained in the associated activation database (AI1), wherein if there is a match between the identifier (ID3) of the "content handler" switching node (CH-ID3) for eavesdropping and at least one identifier (ID1 - ID4) contained in the activation database (AI1) then the further eavesdropping measure is activated and/or if there is no match then an information item about failure of the activation of the eavesdropping measure is forwarded to the appropriate consumer or the authority unit (LEA) tasked with implementing and evaluating eavesdropping measures.

20. Switching node according to one of Claims 14 to 19,
**characterized**
**in that** eavesdropping measures provided for identifying the communication subscribers as communication subscribers for eavesdropping are activated by means of stipulated identity identifiers, for example MSISTN, IMSI, IMEI, SIP URI, Tel URI, IP and/or cell addresses and also E.164, and/or
**in that** the activation databases (AI1 - AI4, AI1* - AI4*) are implemented as continually updated activation lists, and/or
**in that** the eavesdropping measure is activated for the existing data link (DV) or else for a prescribed period, and/or
**in that** the data link (DV) is provided for transmitting audio, video or further multimedia data and also short messages.

## Revendications

1. Procédé pour activer au moins une mesure d'écoute supplémentaire dans au moins un noeud de commutation (CH-ID2 - CH-ID4, CH-ID2* - CH-ID4*) d'un réseau de communication (KN) à commutation de paquets et/ou de cellules composé de plusieurs noeuds de commutation (IP-ID1, IP-ID1*, CH-ID2 - CH-ID4, CH-ID2* - CH-ID4*), le réseau de communication (KN) comprenant des noeuds de commutation « Communication Handler » (IP-ID1, IP-ID1*) et des noeuds de commutation « Content Handler » (CH-ID2 - CH-ID4, CH-ID2* - CH-ID4*), et une première mesure d'écoute étant initialisée par un noeud de commutation « Communication Handler » (IP-ID1, IP-ID1*), la mesure d'écoute supplémentaire servant à écouter au moins une liaison de données (DV) existant entre deux abonnés de communication (T1, T2) et commutée via au moins un noeud de commutation « Content Handler » (CH-ID2 - CH-ID4, CH-ID2* - CH-ID4*), des identifiants univoques (ID1 - ID4, ID1* - ID4*) étant respectivement associés aux différents noeuds de commutation (IP-ID1, IP-ID1*, CH-ID2 - CH-ID4, CH-ID2* - CH-ID4*) du réseau de communication (KN), et dans lequel au moins l'un des deux abonnés de communication (T1, T2) est identifié, au moyen de la première mesure d'écoute, comme étant l'abonné de communication (T1) à écouter, au moins une base de données d'activation (AI1, AI1*) qui comporte les identifiants (ID1 - ID4, ID1* - ID4*) des noeuds de commutation « Content Handler » (CH-ID2 - CH-ID4, CH-ID2* - CH-ID4*) autorisés pour activer des mesures d'écoute supplémentaires étant respectivement associée au moins aux noeuds de commutation (IP-ID1, IP-ID1*) prévus pour activer une mesure d'écoute supplémentaire, une activation de la mesure d'écoute supplémentaire pour écouter le noeud de commutation « Content Handler » (CH-ID3, CH-ID3*) à écouter étant uniquement effectuée si l'identifiant (ID3, ID3*) du noeud de commutation « Content Handler » (CH-ID3, CH-ID3*) à écouter est identique à au moins un identifiant (ID1 - ID4, ID1* - ID4*) contenu dans la base de données d'activation (AI1, AI1*).

2. Procédé selon la revendication 1, **caractérisé en ce que** l'activation des mesures d'écoute supplémentaires est effectuée dans un noeud de commutation « Communication Handler » (IP-ID1, IP-ID1*) ou dans un noeud de commutation « Content Handler » (CH-ID2 - CH-ID4, CH-ID2* - CH-ID4*).

3. Procédé selon la revendication 2, **caractérisé en ce que** des bases de données d'activation (AI1, AI1*) sont prévues tant dans les noeuds de commutation « Communication Handler » (IP-ID1, IP-ID1*) que dans les noeuds de commutation « Content Handler » (CH-ID2 - CH-ID4, CH-ID2* - CH-ID4*).

4. Procédé selon l'une des revendications 1 à 3, **caractérisé en ce que**, pour activer la mesure d'écoute supplémentaire dans le noeud de commutation « Communication Handler » associé (IP-ID1, IP-ID1*), au moins une information d'activation (AI) est générée et est transmise au noeud de commutation « Content Handler » (CH-ID3, CH-ID3*) à écouter.

5. Procédé selon l'une des revendications 1 à 4, **caractérisé en ce que** l'établissement, le maintien et la fermeture d'une liaison de communication (KV) sont commandés par l'intermédiaire d'une liaison de signalisation (SV) qui est gérée par les noeuds de commutation « Communication Handler » (IP-ID1, IP-ID1*).

6. Procédé selon l'une des revendications 1 à 5, **caractérisé en ce que** les identifiants (ID1 - ID4, ID1* - ID4*) stockés dans la base de données d'activation (AI1, AI1*) sont sélectionnés de manière spécifique au pays.

7. Procédé selon l'une des revendications 1 à 5, **caractérisé en ce que** :
- l'identifiant (ID3) du noeud de commutation « Content Handler » (CH-ID3) via lequel passe la liaison de donnés à écouter (DV) est comparé aux identifiants (ID1 - ID4) contenus dans la base de données d'activation associée (AI1) et
- si l'identifiant (ID3) du noeud de commutation « Content Handler » (CH-ID3) à écouter est identique à au moins un identifiant (ID1 - ID4) contenu dans la base de données d'activation (AI1), il se produit une activation de la mesure d'écoute supplémentaire.

8. Procédé selon l'une des revendications 1 à 7, **caractérisé en ce que**, après l'activation de la mesure d'écoute, une copie de la liaison de données (DV) qui passe par le noeud de commutation « Content Handler » (CH-ID3) à écouter est retransmise à celui qui en a besoin resp. à l'unité de l'autorité (LEA) chargée de l'exécution et de l'évaluation de mesures d'écoute.

9. Procédé selon la revendication 7, **caractérisé en ce que**, si l'identifiant (ID3) du noeud de commutation « Content Handler » (CH-ID3) à écouter n'est pas identique à au moins un identifiant (ID1 - ID4) contenu dans la base de données d'activation (AI1), une information relative à l'échec de l'activation de la mesure d'écoute est retransmise à celui qui en a besoin resp. à l'unité de l'autorité (LEA) chargée de l'exécution et de l'évaluation de mesures d'écoute.

10. Procédé selon l'une des revendications 3 à 9, **caractérisé en ce que** les mesures d'écoute prévues pour identifier les abonnés de communication comme étant des abonnés de communication à écouter sont activées au moyen d'identifiants d'identité déterminés, par exemple, MSISTN, IMSI, IMEI, SIP URI, Tel URI, IP, et/ou d'adresses de cellules ainsi qu'E.164.

11. Procédé selon l'une des revendications 1 à 10, **caractérisé en ce que** les bases de données d'activation (AI1-AI4, AI1*-AI4*) sont réalisées en tant que listes d'activations mises à jour continuellement.

12. Procédé selon l'une des revendications 1 à 11, **caractérisé en ce que** l'activation de la mesure d'écoute est effectuée pour la liaison de données existante (DV) ou également pour une durée de temps donnée.

13. Procédé selon l'une des revendications 1 à 12, **caractérisé en ce que** sont transmis, via la liaison de données (DV), des données audio, vidéo ou autres données multimédias ainsi que des messages courts.

14. Noeud de commutation pour activer au moins une mesure d'écoute supplémentaire dans un réseau de communication (KN) à commutation de paquets et/ou de cellules qui comprend au moins un noeud de commutation « Communication Handler » (IP-ID1, IP-ID1*) et au moins un noeud de commutation « Content Handler » (CH-ID2 - CH-ID4, CH-ID2* - CH-ID4*) auxquels sont respectivement associés des identifiants univoques (ID1 - ID4, ID1* - ID4*), une première mesure d'écoute étant initialisée par un noeud de commutation « Communication Handler » (IP-ID1, IP-ID1*), le noeud de commutation étant, en vue de l'activation d'au moins une mesure d'écoute supplémentaire, réalisé en tant que noeud de commutation « Communication Handler » (IP-ID1, IP-ID1*) ou en tant que noeud de commutation « Content Handler » (CH-ID2 - CH-ID4, CH-ID2* - CH-ID4*), la mesure d'écoute supplémentaire servant à écouter au moins une liaison de données (DV) existant entre deux abonnés de communication (T1, T2) et commutée via au moins un noeud de commutation « Content Handler » (CH-ID2 - CH-ID4, CH-ID2* - CH-ID4*) et au moins l'un des deux abonnés de communication (T1, T2) étant identifié, au moyen de la première mesure d'écoute, comme étant l'abonné de communication (T1) à écouter, au moins une base de données d'activation (AI1, AI1*) qui comporte les identifiants (ID1 - ID4, ID1* - ID4*) des noeuds de commutation « Content Handler » (CH-ID2 - CH-ID4, CH-ID2* - CH-ID4*) autorisés pour activer des mesures d'écoute supplémentaires étant respectivement associée au noeud de commutation prévu pour activer la mesure d'écoute supplémentaire et le noeud de commutation (IP-ID1, IP-ID1*) prévu pour activer la mesure d'écoute supplémentaire étant réalisé pour vérifier que l'identifiant (ID3, ID3*) du noeud de commutation « Content Handler » (CH-ID3, CH-ID3*) à écouter est identique à au moins un identifiant (ID1 - ID4, ID1* - ID4*) contenu dans la base de données d'activation (AI1, AI1*), une activation de la mesure d'écoute supplémentaires pour écouter le noeud de commutation « Content Handler » (CH-ID3, CH-ID3*) à écouter étant uniquement effectuée en cas d'identité.

15. Noeud de commutation selon la revendication 14, **caractérisé en ce que** les bases de données d'activation (AI1, AI1*) sont prévues tant dans les noeuds de commutation « Communication Handler » (IP-ID1, IP-ID1*) que dans les noeuds de commutation « Content Handler » (CH-ID2 - CH-ID4, CH-ID2* - CH-ID4*).

16. Noeud de commutation selon la revendication 14 ou 15, **caractérisé en ce que**, pour activer la mesure d'écoute supplémentaire dans le noeud de commutation « Communication Handler » associé (IP-ID1, IP-ID1*), celui-ci est réalisé pour générer au moins une information d'activation (AI) et pour la transmettre au noeud de commutation « Content Handler » (CH-ID3, CH-ID3*) à écouter.

17. Noeud de commutation selon l'une des revendications 14 à 16, **caractérisé en ce que** le noeud de commutation « Communication Handler » (IP-ID1, IP-ID1*) est réalisé pour établir, maintenir et fermer une liaison de communication (KV) par l'intermédiaire d'une liaison de signalisation (SV).

18. Noeud de commutation selon l'une des revendications 14 à 17, **caractérisé en ce que** la base de données d'activation (AI1, AI1*) comporte des identifiants (ID1 - ID4, ID1* - ID4*) stockés de manière spécifique au pays.

19. Noeud de commutation selon l'une des revendications 14 à 18, **caractérisé en ce que** le noeud de commutation est réalisé pour comparer l'identifiant (ID3) du noeud de commutation « Content Handler » (CH-ID3) via lequel passe la liaison de donnés à écouter (DV) aux identifiants (ID1 - ID4) contenus dans la base de données d'activation associée (AI1), une activation de la mesure d'écoute supplémentaire se produisant si l'identifiant (ID3) du noeud de commutation « Content Handler » (CH-ID3) à écouter est identique à au moins un identifiant (ID1 - ID4) contenu dans la base de données d'activation (AI1) et/ou une information relative à l'échec de l'activation de la mesure d'écoute est retransmise à celui qui en a besoin resp. à l'unité de l'autorité (LEA) chargée de l'exécution et de l'évaluation de mesures d'écoute en cas de non-identité.

20. Noeud de commutation selon l'une des revendications 14 à 19, **caractérisé en ce que**, pour identifier les abonnés de communication en tant qu'abonnés de communication à écouter, des mesures d'écoute sont activées au moyen d'identifiants d'identité déterminés, par exemple, MSISTN, IMSI, IMEI, SIP URI, Tel URI, IP, et/ou d'adresses de cellules ainsi qu'E.164 et/ou **en ce que** les bases de données d'activation (AI1-AI4, AI1*-AI4*) sont réalisées en tant que listes d'activations mises à jour continuellement et/ou **en ce que** l'activation de la mesure d'écoute se produit pour la liaison de données existante (DV) ou également pour une durée de temps donnée et/ou **en ce que** la liaison de données (DV) est prévue pour la transmission de données audio, vidéo ou autres données multimédias ainsi que de messages courts.
